# EUROPÄISCHE PATENTANMELDUNG

(11) **EP 3 451 684 A1**
(43) Veröffentlichungstag der Anmeldung: **06.03.2019**
(21) Anmeldenummer: 17188578.3
(22) Anmeldetag: 30.08.2017
(51) Int. Cl.: H04Q 9/00, G01D 4/00

(54) **DATENKONZENTRATOR**

(71) Anmelder: Ganz, Bruno, 8200 Schaffhausen (CH)
(72) Erfinder: Ganz, Bruno, 8200 Schaffhausen (CH)
(74) Vertreter: Keller & Partner Patentanwälte AG

(57) **Zusammenfassung**

Die Erfindung betrifft einen Datenkonzentrator (10) zur Anordnung in einem Gebäude (50), wobei der Datenkonzentrator (10) einen ersten Empfänger umfasst zum Empfangen von Messdaten von einem im Gebäude (50) angeordneten Messgerät (60). Weiter umfasst der Datenkonzentrator (10) einen ersten Sender (21) zur Übertragung der Messdaten in eine Datencloud (40) und der Datenkonzentrator (10) umfasst einen zweiten Sender (31) zur Übertragung der Messdaten in die Datencloud (40), wobei mindestens einer der zwei Sender (21, 31) zur drahtlosen Übertragung der Messdaten in die Datencloud (40) ausgebildet ist. Zudem betrifft die Erfindung eine Kommunikationsanordnung zur Erfassung von Messdaten. Weiter betrifft die Erfindung ein Verfahren zur Übertragung von Messdaten mit einem im Gebäude (50) angeordnetem Datenkonzentrator (10).

## Beschreibung

### Technisches Gebiet

Die Erfindung betrifft einen Datenkonzentrator zur Anordnung in einem Gebäude, wobei der Datenkonzentrator einen ersten Empfänger umfasst zum Empfangen von Messdaten von einem im Gebäude angeordneten Messgerät, und der Datenkonzentrator einen ersten Sender umfasst zur Übertragung der Messdaten in eine Datencloud. Die Erfindung betrifft weiter eine Kommunikationsanordnung mit einem Datenkonzentrator und ein Verfahren zur Übertragung von Messdaten mit einem in einem Gebäude angeordneten Datenkonzentrator.

### Stand der Technik

Um den Stromverbrauch in einem Gebäude zu erfassen, ist üblicherweise ein Stromzähler im Gebäude montiert. Dieser erfasst die von den Verbrauchern im Gebäude aufgenommene Menge an elektrischer Energie. Hierzu misst der Stromzähler den Strom, die Spannung und allenfalls weitere Eigenschaften wie beispielsweise die Amplitude oder die Phase des Stroms. Damit diese Messdaten nicht in jedem Gebäude einzeln abgelesen werden müssen, sind sogenannte intelligente Zähler entwickelt worden. Diese intelligenten Zähler - auch bekannt unter der englischen Bezeichnung "Smart Meter" - können digitale Daten an einen Empfänger im Gebäude oder ausserhalb des Gebäudes senden und auch Daten empfangen. Üblicherweise sind die intelligenten Zähler in einem Kommunikationsnetzwerk eingebunden.

Die intelligenten Zähler können den Stromverbrauch in einem Gebäude auch direkt an den Energieversorger melden und dadurch in regelmässigen Abständen Daten über den Stromverbrauch an den Energieversorger übertragen. Dieser kann die erhaltenen Messwerte auswerten und kann dadurch die Energieversorgung gezielt steuern. Zudem ist der Energieversorger dank den regelmässigen aktuellen Messwerten nicht von Schätzungen zum Stromverbrauch abhängig, wie dies der Fall bei herkömmlichen Zählern ohne Anbindung an ein Kommunikationsnetz ist. Ferner kann der Energieversorger die Prognose-, Abrechnungs- und Bilanzierungsprozesse der Energieversorgung effizienter gestalten, da er stets aktuelle Messwerte zur Verfügung hat. Ausserdem kann der Energieversorger eine kurzfristige Rechnungsstellung nach dem tatsächlichen Stromverbrauch vornehmen und Tarifänderungen können umgehend berücksichtigt werden.

Da die intelligenten Zähler je nach Ausführung auch eine Anzeige der Messdaten an einem Computer oder sonstigem Anzeigegerät des Konsumenten ermöglichen, kann der Konsument den momentanen Stromverbrauch analysieren. Er kann dadurch selber den Stromverbrauch effizient steuern, und beispielsweise den Verbrauch in Nebenzeiten mit günstigeren Tarifen planen und somit finanzielle Vorteile erzielen.

Aus dem Stand der Technik sind nicht nur die intelligenten Zähler, sondern ganzheitliche intelligente Messsysteme (IMS) bekannt. Diese bestehen aus einem intelligenten Zähler, der die Daten digital erfasst und aus einem Datenkonzentrator oder einer Kommunikationseinheit, beispielsweise einem sogenannten "Smart Meter Gateway", welche die vom intelligenten Zähler erfassten Messdaten speichern, verarbeiten und in ein Netzwerk übertragen, um die verarbeiteten Daten an einen Empfänger ausserhalb des Gebäudes weiterzuleiten.

Grundsätzlich sind aus dem Stand der Technik zwei Varianten bekannt, um die vom intelligenten Zähler erfassten Messdaten vom Zähler in ein System von Empfängern, in ein sogenanntes Head-End-System (HES), zu übermitteln. In einer ersten Variante werden die Messdaten vom intelligenten Zähler über eine "Narrowband Powerline Communication"-Verbindung (NB-PLC) zu einem Datenkonzentrator in einer Trafostation ausserhalb des Gebäudes übermittelt. Dabei ist der Datenkonzentrator auch mit dieser Stromleitung (Powerline) mit Energie versorgt. Der Datenkonzentrator konzentriert die Messdaten und übermittelt diese gebündelt über ein "Wide Area Network" (WAN) in ein "Head-End-System".

In einer zweiten Variante werden die vom intelligenten Zähler erfassten Messdaten in eine gebäudeinterne Kommunikationsinfrastruktur übermittelt und von dieser in ein WAN übertragen. Vom WAN gelangen die Messdaten dann in das "Head-End-System".

Eine Weiterentwicklung der zweiten Variante offenbart beispielsweise die WO 2010/103332 A1 (Energeno). Bei dieser Anordnung steht eine Kommunikationseinheit einerseits drahtgebunden oder drahtlos mit mehreren Stromzählern in Verbindung. Andererseits ist die Kommunikationseinheit über Internet mit einem Server verbunden. Die Kommunikationseinheit senden Meldungen an den Server, wenn ein Stromzähler eine Änderung in der Amplitude oder der Phase des Stroms erkennt. Der Server speichert die von der Kommunikationseinheit empfangenen Informationen in einer Datenbank ab und wertet die Daten aus.

Eine solche Anordnung hat den Nachteil, dass eine relativ komplexe Installation benötigt wird. So muss der Stromzähler mittels zusätzlicher Verkabelung im Gebäude mit der Kommunikationseinheit verbunden werden. Wird eine gebäudeinterne Funkverbindung wie beispielsweise eine drahtlose Meter-Bus-Verbindung zwischen Stromzähler und Kommunikationseinheit benutzt, muss die Kommunikationseinheit in Reichweite des Senders im Stromzähler, üblicherweise im Keller des Gebäudes, platziert werden, damit die Messdaten über Funk zur Kommunikationseinheit übertragen werden können. Jedoch ist dies häufig aufgrund der Gebäudestruktur nicht möglich. Zudem ist eine eigene Installation für die Verbindung von der Kommunikationseinheit zum Server erforderlich.

Eine andere Ausführung der zweiten Variante offenbart die US 2012/0242499 A1 (General Electric). Bei dieser Anordnung umfasst eine Kommunikationseinheit eine PLC-Schnittstelle und ist über eine "Powerline Communication"-Verbindung (PLC) mit einem Verbrauchszähler verbunden. Die Kommunikationseinheit umfasst zudem eine zweite PLC-Schnittstelle, um die von den Verbrauchszählern erfassten Daten über eine PLC-Verbindung in eine Cloud zu übermitteln. In einer weiteren Ausführung kann die Kommunikationseinheit auch zwei Funkschnittstellen umfassen, um über eine Funkverbindung mit den Verbrauchszählern zu kommunizieren und um Daten von der Kommunikationseinheit in die Cloud über ein Mobilfunknetz zu übermitteln. In einer weiteren Ausführung umfasst die Kommunikationseinheit eine Funkschnittstelle, um mit dem Verbrauchszähler zu kommunizieren und eine PLC-Schnittstelle, um über eine PLC-Verbindung mit der Cloud zu kommunizieren.

Eine andere Vorrichtung offenbart die US 2005/0207079 A1 (Tiller et al.). Diese Vorrichtung wird an einer Steckdose in einem Gebäude angeschlossen werden, während elektrische Verbraucher an der Vorrichtung angeschlossen werden. Die Vorrichtung stellt ein Leistungs- und Datenmanagement für die elektrischen Verbraucher zur Verfügung. Zudem ist die Vorrichtung mit einem Stromzähler und über Internet mit einem externen Empfänger verbunden. Dabei analysiert, überwacht und korrigiert die Vorrichtung die Daten, welche die Vorrichtung über Kabel vom Energieversorger und von den an der Vorrichtung angeschlossenen Verbrauchern erhält. Die Vorrichtung kann zudem digitale Daten mit dem Stromzähler austauschen. Die Verbindung zwischen Vorrichtung und Stromzähler kann über Glasfaserkabel oder drahtlos mittels eines Drahtlosübermittlungsmoduls der Vorrichtung erfolgen. Diese drahtlose Verbindung ist zusätzlich zu einer PLC-Verbindung oder "Broadband over power lines" (BPL)-Verbindung möglich, insbesondere bei einem Stromausfall oder in einem Notfall, wenn die Notstromversorgung mit Batterie eine solche Kommunikation zwischen der Vorrichtung und dem Stromzähler erlaubt.

Solche bekannten Systeme haben den Nachteil, dass eine eigene und damit aufwändige und komplexe Infrastruktur für die Verbindung zwischen dem Datenkonzentrator oder Kommunikationseinheit und dem System des Empfängers benötigt wird. Zudem ist bei einer Verwendung eines WAN und des Internets für die Übermittlung der Messdaten zum Empfänger nicht in jedem Fall eine Verbindung sichergestellt. Fällt das gebäudeinterne Netzwerk oder das WAN aus oder ist die Internetverbindung unterbrochen, können keine Daten vom intelligenten Zähler zum System des Energieversorgers übermittelt werden. In diesem Fall sind die Vorteile des intelligenten Zählers nicht nutzbar.

### Darstellung der Erfindung

Aufgabe der Erfindung ist es, einen dem eingangs genannten technischen Gebiet zugehörenden Datenkonzentrator zu schaffen, welcher zuverlässig eine Kommunikationsverbindung zwischen dem Datenkonzentrator und einem Empfänger ausserhalb des Gebäudes sicherstellt.

Die Lösung der Aufgabe ist durch die Merkmale des Anspruchs 1 definiert. Gemäss der Erfindung umfasst der Datenkonzentrator einen zweiten Sender zur Übertragung der Messdaten in die Datencloud, wobei mindestens einer der zwei Sender zur drahtlosen Übertragung der Messdaten in die Datencloud ausgebildet ist.

Da der Datenkonzentrator einen zweiten Sender umfasst, können die Messdaten vom Datenkonzentrator wahlweise mit dem ersten Sender über eine erste Kommunikationsverbindung oder mit dem zweiten Sender über eine zweite Kommunikationsverbindung in die Datencloud übertragen werden. Dadurch können, wenn beispielsweise die erste Kommunikationsverbindung oder die zweite Kommunikationsverbindung eine ungenügende Übertragung der Messdaten ermöglicht oder ganz ausfällt, die Messdaten über die jeweils andere Kommunikationsverbindung in die Datencloud übertragen werden. Dadurch kann sichergestellt werden, dass mindestens eine Kommunikationsverbindung zwischen Datenkonzentrator und Datencloud vorhanden ist und somit die Messdaten zuverlässig in die Datencloud übertragen werden können.

Da mindestens einer der Sender zur drahtlosen Übertragung der Messdaten in die Datencloud ausgebildet ist, steht immer eine Kommunikationsverbindung, die unabhängig von der Verkabelung im Gebäude ist, zur Verfügung. Das ermöglicht auch eine Übermittlung der Messdaten, wenn beispielsweise eine Störung des Netzwerks im Gebäude vorliegt oder die gebäudeinterne Kommunikationsinfrastruktur zeitweise nicht mit dem Internet verbunden ist.

Beispielsweise kann der erste Sender dazu ausgebildet sein, über ein gebäudeinternes Netzwerk (LAN), welches mit dem Internet verbunden ist, eine Kommunikationsverbindung zur Datencloud herzustellen. Der zweite Sender kann beispielsweise dazu ausgebildet sein, über ein Mobilfunknetz wie beispielsweise GSM, GPRS, UMTS, LTE oder andere Mobilfunknetze eine Kommunikationsverbindung zur Datencloud herzustellen. Fällt nun das LAN im Gebäude aus oder ist die Verbindung zum Internet unterbrochen, können die Messdaten mit dem zweiten Sender über die Mobilfunkverbindung in die Datencloud übertragen werden.

Dadurch kann eine unterbrechungsfreie Kommunikationsverbindung zwischen dem Datenkonzentrator und der Datencloud sichergestellt werden. Das bietet beispielsweise den Vorteil, dass der Energieversorger Messdaten über den Stromverbrauch jederzeit und unterbrechungsfrei aus der Datencloud abrufen und analysieren kann. Das ermöglicht dem Energieversorger die Stromproduktion und die Stromverteilung genau zu steuern und die Prognose- und Abrechnungsprozesse des Energiesystems besonders genau und effizient durchzuführen.

Zudem besteht mit dem erfindungsgemässen Datenkonzentrator die Möglichkeit, die Kommunikationsverbindung zu wechseln, wenn aus bestimmten Gründen die Benutzung einer Kommunikationsverbindung zeitweise unerwünscht ist. Wenn beispielsweise der erste Sender eine Verbindung über ein lokales Netzwerk ermöglicht, bei dem zu bestimmten Tageszeiten die Übertragungsgeschwindigkeit zu niedrig ist, welches in der Nacht abgeschaltet ist oder bei welchem hohe Übertragungskosten anfallen, können beispielsweise die Messdaten mit dem zweiten Sender über eine Funkverbindung zur Datencloud übertragen werden.

In einer anderen Ausführung können beispielsweise auch der erste und der zweite Sender je eine drahtlose Kommunikationsverbindung vom Datenkonzentrator zur Datencloud ermöglichen. In diesem Fall kann der erste Sender beispielsweise dazu ausgebildet sein, eine Verbindung über GSM herzustellen und der zweite Sender dazu ausgebildet sein, eine Verbindung über Richtfunk oder über ein anderes Mobilfunknetz zu ermöglichen. Beim Ausfall einer der beiden Funkverbindungen oder bei einer temporär zu tiefen Übertragungsgeschwindigkeit bei einer der Funkverbindungen kann von einem Sender auf den anderen Sender gewechselt werden.

Die Datencloud bietet den Vorteil, dass mehrere Benutzer unabhängige voneinander auf die Messdaten in der Datencloud zugreifen können. So können zum Beispiel der Netzbetreiber, der Energieversorger und der Stromkonsument Zugang zur Datencloud mit den aktuellen Messdaten haben. Dadurch können diese Benutzer die benötigten Ressourcen gezielt bereitstellen und auf allfällige Änderungen rasch reagieren. Der Energieversorger kann dank dem direkten Zugang zur Datencloud eine kurzfristige Rechnungsstellung nach dem tatsächlichen Stromverbrauch vornehmen.

Unter dem Begriff "Datenkonzentrator" wird eine Vorrichtung verstanden, die Daten von an der Vorrichtung angeschlossenen Geräten sammeln kann und die Daten gebündelt (konzentriert) an einen Empfänger übermitteln kann. Ein solcher Datenkonzentrator ist aus dem Stand der Technik bekannt. Durch die Bündelung der Daten kann der Datentransfer an den Empfänger reduziert werden. Vorzugsweise ist dabei der Datenkonzentrator ein Bestandteil eines Smart-Metering-Systems. In diesem Fall empfängt der Datenkonzentrator vorzugsweise Messdaten von einem intelligenten Strom-, Wasser-, GasÖl- oder Wärmezähler und übermittelt diese Messdaten weiter an einen Empfänger.

Beim erfindungsgemässen Datenkonzentrator ist nicht zwingend, dass dieser die Messdaten bündelt. Je nach Menge der Daten oder je nach Einstellung des Datenkonzentrators kann der Datenkonzentrator die Daten auch nur vom Messgerät empfangen und in die Datencloud weiterleiten.

Ferner können die Daten im Datenkonzentrator auch zwischengespeichert werden. Der Datenkonzentrator weist hierzu vorzugsweise einen internen Speicher auf. Wenn beispielsweise die Kommunikationsverbinung zur Datencloud komplett ausfällt, können in diesem Fall die Daten im Datenkonzentrator zwischengespeichert werden. Wenn die Verbindung zur Datencloud wieder funktioniert, können die gespeicherten Daten an die Datencloud übertragen werden. Dadurch gehen die Messdaten nicht verloren auch wenn die Kommunikationsverbindung zur Datencloud vollständig ausfällt.

Zudem können die Daten vom Datenkonzentrator auch verändert werden. So können die Daten beispielsweise zusammengefasst werden oder aus mehreren Zahlenwerten kann zum Beispiel ein Durchschnitt gebildet werden, welcher dann zum Empfänger weitergeleitet wird. In einer einfachsten Ausführung sendet der Datenkonzentrator die konzentrierten Messdaten gesamthaft als Datenpaket weiter. In einer anderen Ausführung kann der Datenkonzentrator auch eine Selektion oder eine Aufbereitung der Messdaten vornehmen. So kann die Kommunikationseinheit beispielsweise nur abrechnungsrelevante Messdaten an die Datencloud senden. Unabhängig davon, ob die Messdaten im Datenkonzentrator verarbeitet werden oder nur weitergeleitet werden, können die Messdaten einzeln oder als Datenpakete in die Datencloud übermittelt werden.

Bei den Messdaten handelt es sich vorzugsweise um gemessene Daten von Ressourcen, welche im Gebäude ge- bzw. verbraucht werden. Bevorzugt umfassen die Messwerte abrechnungsrelevante Mengen dieser Ressourcen, welche von aussen in das Gebäude transportiert werden. Die Ressourcen können beispielsweise elektrische Energie, Wasser, Öl, Fernwärme oder Gas umfassen. Die Messdaten können aber auch Daten umfassen, welche nicht direkt mit diesen Grössen zu tun haben. So können die Messdaten beispielsweise auch Informationen über das Messgerät, wie zum Beispiel eine individuelle Kennzeichnung des Messgeräts, Informationen über das Gebäude und/oder die Infrastruktur des Gebäudes umfassen.

Unter dem Begriff "Messgerät" werden Geräte oder Vorrichtungen zur Erfassung der Ressourcen, welche im Gebäude gebraucht werden, verstanden. Messgeräte sind beispielsweise Strommessgeräte, Spannungsmessgeräte, Energiezähler, Energiemessgeräte, Ölmessgeräte, oder Gas-, Wasser oder Wärmezähler. So können Wasserzähler beispielsweise als Flügelwasserzähler, Messkapselzähler, Volumenzähler und Gasmessgeräte beispielsweise als Balgengaszähler, Drehkolbenzähler, Turbinenradzähler, Ultraschallzähler oder Wirbelgaszähler ausgebildet sein. Das Messgerät kann aber auch ein sogenannter intelligenter Zähler wie beispielsweise ein intelligenter Strom-, Gas-, Wasser-, Öl- oder Wärmezähler sein. Solche intelligenten Zähler können digitale Daten senden und empfangen und sind in ein Kommunikationsnetz eingebunden.

Vorzugsweise ist das Messgerät ein Strommessgerät. In diesem Fall umfassen die Messdaten Informationen über den Verbrauch elektrischer Energie im Gebäude. Die Messdaten können somit zum Beispiel Angaben über die bezogene Energiemenge, Strommenge, Stromstärke, Amplitude und Phase des Stroms oder Angaben über die Spannung und Amplitude und Phase der Spannung umfassen. Zudem können die Messdaten auch Informationen über den zeitlichen Verlauf dieser Grössen beinhalten.

Ferner besteht auch die Möglichkeit, dass andere Messgeräte wie Spannungsmessgeräte, Ölmessgeräte, Gas-, Wasser- oder Wärmezähler am Strommessgerät angeschlossen sind und dadurch die Messdaten von diesen anderen Messgeräten über das Strommessgerät an den Datenkonzentrator übermittelt werden können. Vorzugsweise sind die anderen Messgeräte mittels drahtgebundenem Meter-Bus oder drahtlosen Meter-Bus an das Strommessgerät angeschlossen.

Der Datenkonzentrator kann dabei Messdaten von mehreren Messgeräten im Gebäude empfangen und in die Datencloud weiterleiten. Das ist insbesondere dann der Fall, wenn das Gebäude sehr gross ist oder wenn es sich beim Gebäude um einen Gebäudekomplex handelt.

Die Messdaten können drahtlos oder drahtgebunden vom Messgerät zum Datenkonzentrator übermittelt werden. Beispiele für eine drahtgebundene Verbindung sind eine Draht-, Ethernet-, Bussystem- oder eine "Powerline Communication"-Verbindung.

Drahtlose Verbindungen sind beispielsweise Mobilfunkverbindungen wie GSM, WLAN, Bluetooth oder eine gebäudeinterne drahtlose Meter-Bus Verbindung.

Falls die Messdaten drahtgebunden vom Messgerät zum Datenkonzentrator übermittelt werden, können die Messdaten beispielsweise mittels Bussystem übertragen werden. Dabei kann jedes Bussystem verwendet werden, welches die Übertragung von Messdaten erlaubt wie beispielsweise ein Meter-Bus (M-Bus). Alternativ dazu kann die Übertragung der Messdaten vom Messgerät zum Datenkonzentrator auch mit einem drahtlosen Bussystem erfolgen, beispielsweise mit einer drahtlosen M-Bus-Verbindung (Funk M-Bus bzw. wireless M-Bus).

Vorzugsweise ist der erste Sender derart ausgebildet, eine Übertragung der Messdaten über eine erste Kommunikationsverbindung zwischen dem Datenkonzentrator und der Datencloud zu ermöglichen und der zweite Sender ist derart ausgebildet, eine Übertragung der Messdaten über eine zweite Kommunikationsverbindung zwischen dem Datenkonzentrator und der Datencloud zu ermöglichen. Hierfür umfassen der erste Sender und der zweite Sender vorzugsweise je eine Schnittstelle, welche eigenständig und unabhängig voneinander funktionieren. Das bedeutet, dass der erste und der zweite Sender je eine eigenständige Kommunikationsverbindung zwischen dem Datenkonzentrator und der Datencloud ermöglichen, welche unabhängig ist von der anderen Kommunikationsverbindung. So kann zum Beispiel eine Kommunikationsverbindung funktionieren, wenn die andere Kommunikationsverbindung gestört oder ganz ausgefallen ist. Dies bedeutet jedoch nicht zwingend, dass das Übertragungsmedium für die beiden Kommunikationsverbindungen unterschiedlich sein muss.

Die erste oder die zweite Kommunikationsverbindung kann drahtlos, drahtgebunden oder teilweise drahtlos und teilweise drahtgebunden erfolgen. Beispielsweise kann die erste oder zweite Kommunikationsverbindung mittels gebäudeinternen lokalem Netzwerk (LAN) und Internet erfolgen, indem das lokale Netzwerk an das Internet angebunden ist. Demnach kann die Kommunikationsverbindung zwischen dem Datenkonzentrator und der Datencloud beispielsweise über LAN und Internet, WLAN und Internet, Bluetooth und Internet, NFC und Internet, WiMAX und Internet oder ZigBee und Internet hergestellt sein.

Die erste oder die zweite Kommunikationsverbindung kann aber auch über eine eigene, vom Internet unabhängig ausgebildete drahtgebundene Verbindung zwischen dem Datenkonzentrator und der Datencloud erfolgen. In diesem Fall führt beispielsweise eine Ethernetverbindung vom Datenkonzentrator zur Datencloud.

Der erfindungsgemässe Datenkonzentrator umfasst mindesten einen Sender, der zur drahtlosen Übertragung der Messdaten in die Datencloud ausgebildet ist. Das bedeutet, mindestens einer der zwei Sender umfasst eine Schnittstelle für eine drahtlose Übertragung der Messdaten in die Datencloud. Der Begriff "drahtlos" schliesst nicht aus, dass ein Teil der Verbindung ausserhalb des Gebäudes drahtgebunden ausgebildet ist. So kann beispielsweise die Verbindung aus dem Gebäude drahtlos hergestellt sein bis zu einem Empfänger eines Telekommunikationsnetzes und die Verbindung von diesem Empfänger in die Speichereinrichtung der Datencloud erfolgt drahtgebunden über eine Datenleitung. Hingegen bedeutet "drahtlose Übertragung", dass die Kommunikationsverbindung vom Datenkonzentrator nach aussen zu einem Empfänger ausserhalb des Gebäudes zwingend drahtlos ist. Demnach fällt in der vorliegenden Beschreibung eine Kommunikationsverbindung, welche ein gebäudeinternes drahtloses Netzwerk benutzt, nicht unter den Begriff "drahtlose Übertagung".

Vorzugsweise ist die drahtlose Kommunikationsverbindung eine Funkverbindung. Dabei kann der Sender sowohl eine Funkverbindung ohne fest zugewiesene Funkfrequenzen ermöglichen, wie auch eine Funkverbindung mit fest zugewiesenen Funkfrequenzen, wie beispielsweise Mobilfunk. Beispiele für Funkverbindungen ohne fest zugewiesene Funkfrequenzen sind CB-Funk, SRD/LPD-Funk, Freenet und PMR446-Funk oder optischer Richtfunk. Funkverbindungen mit fest zugewiesenen Funkfrequenzen sind zum Beispiel Mobilfunknetze wie "Global System for Mobile Communications" (GSM), "General Packet Radio Service" (GPRS), "Universal Mobile Telecommunications System" (UMTS) oder "Long Term Evolution" (LTE).

Vorzugsweise ist einer der Sender zur drahtgebundenen Übertragung der Messdaten in die Datencloud ausgebildet und der andere der zwei Sender zur drahtlosen Übertragung der Messdaten in die Datencloud ausgebildet. Vorzugsweise ermöglichen der erste Sender und der zweite Sender je eine Kommunikationsverbindung zwischen dem Datenkonzentrator und der Datencloud mit je einer unterschiedlichen Übertragungstechnik. So kann beispielsweise der erste Sender eine Übertragung über ein lokales Netzwerk und über Internet ermöglichen, während der zweite Sender beispielsweise eine Funkverbindung ermöglicht. Durch eine solche redundante Verbindung ist eine besonders zuverlässige Verbindung zwischen Datenkonzentrator und Datencloud ermöglicht.

Der erfindungsgemässe Datenkonzentrator kann als physische Einheit in der Form eines Geräts wie einer Rechnereinheit oder einem Computer ausgebildet sein. Genauso gut kann der Datenkonzentrator auch Teile umfassen, die nicht als physisches Gerät ausgebildet sind, sondern in der Form von Software auf einem Computer oder Mikrocontroller in einem bestehenden System implementiert sind. In diesem Fall ist eine physische Einheit mit dem ersten Empfänger und dem ersten und zweiten Sender an das bestehende System mit der Software angeschlossen.

Unabhängig davon ob ein Teil der Funktionen des Datenkonzentrators als Software implementiert ist oder nicht, ist der Datenkonzentrator physisch getrennt vom Messgerät ausgebildet. Der Datenkonzentrator ist somit in einem vom Messgerät separaten Gerät oder einer separaten Vorrichtung realisiert. Dadurch lässt sich der Datenkonzentrator im Gebäude an einem anderen Ort anordnen, als das Messgerät. So kann sich beispielsweise das Messgerät in einem Untergeschoss des Gebäudes befinden, während der Datenkonzentrator in einem oberen Stockwerk angeordnet werden kann. Das ist vorteilhaft, wenn mindestens einer der Sender zur Übertragung der Messdaten in die Datencloud über Funk ausgebildet ist. In diesem Fall kann der Datenkonzentrator frei wählbar im Gebäude platziert werden, so dass eine optimale Funkverbindung ermöglicht werden kann.

Unter dem Begriff "Gebäude" wird eine beliebige Liegenschaft verstanden wie beispielsweise ein Wohnhaus, ein Bürokomplex, eine Fabrikhalle, ein Gebäudekomplex, ein Mehrfamilienhaus, Ausstellungsräumlichkeiten, eine Garage oder ein Häuserblock. Dabei umfasst Begriff "Gebäude" alle Gebäude, welche zum Gebäudekomplex gehören.

Unter "Datencloud" ist in der vorliegenden Beschreibung eine zentrale oder dezentrale IT-Infrastruktur mit Speicherplatz zu verstehen. Das bedeutet, dass der Speicherplatz von einem oder mehreren Speichermedien bereitgestellt wird, die miteinander verbunden sind. Bei der beschriebenen Erfindung wird die Datencloud dazu genutzt, Messdaten aber auch sonstige Daten in der Datencloud abzuspeichern. Vorzugsweise können sich mehrere autorisierte Benutzer in der Datencloud anmelden, um Zugriff zu den Daten in der Datencloud zu erhalten. Solche Benutzer können beispielsweise ein Netzbetreiber, ein Energieversorger, eine Bilanzgruppe, sowie Anbieter von Systemdienstleistungen und der Konsument sein.

Der Begriff "Übertragung der Messdaten in eine Datencloud" umfasst den gesamten Übertragungspfad vom Datenkonzentrator in die Speichereinrichtung der Datencloud. So werden üblicherweise die Daten an eine Empfangsstation eines Kommunikationsnetzbetreibers übermittelt. Von diesem Empfänger gelangen die Daten über Internet oder auf einer separaten Leitung zu der Speichereinrichtung der Datencloud. Die Datencloud befindet sich ausserhalb des Gebäudes.

Vorzugsweise ist der Datenkonzentrator derart ausgebildet, um wahlweise den ersten oder den zweiten Sender zur Übertragung der Messdaten in die Datencloud benutzen zu können. Das bedeutet, der Datenkonzentrator kann wahlweise die Messdaten über die erste oder die zweite Kommunikationsverbindung zur Datencloud übermitteln. Mit anderen Worten ausgedrückt, fällt der Datenkonzentrator automatisch die Entscheidung, ob der erste oder der zweite Sender benutzt wird. Dadurch kann der Datenkonzentrator beispielsweise anhand von Kriterien wie Kosten oder Übertragungsgeschwindigkeit den ersten oder den zweiten Sender auswählen zur Übertragung der Messdaten in die Datencloud. Somit kann diejenige Kommunikationsverbindung gewählt werden, welche am besten den vorgängig definierten Kriterien entspricht.

Alternativ besteht die Möglichkeit, dass die Übertragung nach einem fixen Schaltplan über den ersten oder den zweiten Sender erfolgt oder dass nicht automatisch, sondern nur durch manuelle Eingabe am Datenkonzentrator die Übertragung über den ersten oder den zweiten Sender eingestellt werden kann. Das bedingt jedoch die Anwesenheit eines Bedieners.

Bevorzugt ist der Datenkonzentrator derart ausgebildet, in Abhängigkeit einer Verfügbarkeit einer ersten Kommunikationsverbindung zwischen dem ersten Sender und der Datencloud und einer Verfügbarkeit einer zweiten Kommunikationsverbindung zwischen dem zweiten Sender und der Datencloud, den ersten oder den zweiten Sender zur Übertragung der Messdaten in die Datencloud zu wählen.

Das bedeutet, der Datenkonzentrator ist derart ausgebildet, die Auswahl des Senders anhand der Verfügbarkeit der Kommunikationsverbindung automatisch und ohne Eingabe eines Benutzers zu treffen. Dadurch ist sichergestellt, dass stets eine Kommunikationsverbindung zwischen dem Datenkonzentrator und der Datencloud besteht und dass die Messdaten in die Datencloud übertragbar sind. Somit ist eine lückenlose Übertragung der Messdaten sichergestellt.

Vorzugsweise umfasst der Datenkonzentrator eine Logikeinheit, welche dazu ausgebildet ist, die Selektion des Senders, welcher für die Übertragung der Messdaten in die Datencloud verwendet werden soll, anhand der Verfügbarkeit der ersten oder der zweiten Kommunikationsverbindung vorzunehmen.

Bevorzugt ist der Datenkonzentrator derart ausgebildet, in einem ersten Schritt in Abhängigkeit der Verfügbarkeit der Kommunikationsverbindungen den ersten oder den zweiten Sender zu wählen und in einem zweiten Schritt, wenn beide Kommunikationsverbindungen verfügbar sind, in Abhängigkeit der Kosten der Kommunikationsverbindung den ersten oder den zweiten Sender zur Übertragung der Messdaten in die Datencloud zu wählen. Dadurch kann jeweils immer die kostengünstige Kommunikationsverbindung gewählt werden kann, wenn beide Kommunikationsverbindungen verfügbar sind. Somit kann die Übertragung nicht nur zuverlässig sondern auch möglichst kostengünstig erfolgen.

Alternativ kann die Wahl des Senders auch nach einem anderen Kriterium erfolgen. So kann der Datenkonzentrator derart ausgebildet sein, in Abhängigkeit der Übertragungsqualität oder der Übertragungsgeschwindigkeit den ersten oder den zweiten Sender zu wählen. Zudem ist es auch möglich, dass die Wahl des Senders in Abhängigkeit von der Art der zu sendenden Daten ausgewählt wird. So können beispielsweise grössere Datenvolumen von mehreren hundert Megabyte oder bestimmte Datenformate über eine drahtgebundene Kommunikationsverbindung und kleine Datenvolumen im Bereich von mehreren Kilobyte oder ausgewählte Datenformate über eine drahtlose Kommunikationsverbindung übertragen werden. Weiter kann die Auswahl aber auch in Abhängigkeit der Tageszeit erfolgen. Wenn beispielsweise der erste Sender über ein lokales drahtloses Netzwerk sendet, welches in der Nacht abgeschaltet ist, kann der zweite Sender die Messdaten nach aussen beispielsweise über eine Funkverbindung an die Datencloud senden. Ferner besteht die Möglichkeit, dass die Auswahl nur in Abhängigkeit der Kosten der Kommunikationsverbindung erfolgt, so dass jeweils immer die kostengünstige Kommunikationsverbindung gewählt werden kann. In diesen Fällen besteht jedoch die Gefahr, dass bei einem Unterbruch der Kommunikationsverbindung zwischen Datenkonzentrator und Datencloud die Messdaten zeitweise nicht übertragen werden und dadurch in der Datencloud die Messdaten nicht lückenlos abrufbar sind.

Mit Vorteil umfasst der erste Empfänger ein Powerline Communication Modul (PLC-Modul) zum Empfangen der Messdaten mittels Powerline Communication-Technik. Unter "Powerline Communication" ist die bekannte Übertragung von Daten mittels Trägerfrequenztechnik auf dem Stromnetz zu verstehen. Das Stromnetz dient somit einerseits zur Speisung des Datenkonzentrators und andererseits zur Übertragung der Messdaten vom Messgerät zum Datenkonzentrator. Das bedeutet, die Messdaten vom Messgerät werden mittels PLC zum Datenkonzentrator übertragen.

Das bietet den Vorteil, dass die Messdaten auf einfache Art und Weise vom Messgerät zum Datenkonzentrator übertragen werden können, da keine spezielle Infrastruktur oder Leitung erstellt werden muss. Die Messdaten können über die bereits bestehenden Stromleitungen im Gebäude übermittelt werden.

Alternativ besteht auch die Möglichkeit, dass der Datenkonzentrator kein PLC-Modul umfasst und die Messdaten beispielsweise über eine Ethernet-Verbindung vom Messgerät zum Datenkonzentrator übertragen werden. Das bedingt jedoch eine aufwändige Verkabelung der Ethernet-Leitungen, falls sich der Datenkonzentrator in einem oberen Bereich des Gebäudes befindet. Ist jedoch der Datenkonzentrator in der Nähe des Messgeräts angeordnet, welches sich üblicherweise in einem Untergeschoss des Gebäudes befindet, ist eine drahtlose Übertragung der Messdaten aus dem Gebäude in die Datencloud vielleicht erschwert oder gar nicht möglich, da im Untergeschoss eventuell keine ausreichende Verbindung zu einem Funknetz möglich ist.

Bevorzugt ist das Powerline Communication Modul ein Narrowband Powerline Communication Modul zum Empfangen der Messdaten mittels Narrowband Powerline Communication. Unter "Narrowband Powerline Communication", abgekürzt als NB-PLC bezeichnet, ist eine schmalband Powerline Communication zu verstehen, welche in einem Frequenzbereich von 9kHz bis 490kHz angesiedelt ist.

Im Unterschied zu anderen PLC-Standards bedingt eine Narrowband PLC-Verbindung keine teure Hardware. So sind die Chipsätze des Narrowband PLC-Moduls deutlich kostengünstiger als beispielsweise diejenigen eines Broadband PLC-Moduls.

Zudem gibt es durch den Einsatz von Narrowband PLC im Unterschied zu anderen PLC-Standards wie beispielsweise Broadband PLC keine Gefahr von Interferenzen und Kollisionen mit anderen PLC-Signalen auf dem Stromnetz. Das ermöglicht eine sichere und zuverlässige Kommunikationsverbindung zwischen dem Messgerät und dem Datenkonzentrator.

Alternativ besteht auch die Möglichkeit, dass der Datenkonzentrator ein Broadband PLC-Modul umfasst zum Empfangen der Messdaten mittels Broadband PLC, welches in einem Frequenzbereich zwischen 1.8MHz und 86MHz lokalisiert ist. Wie erwähnt, besteht dann allerdings die Gefahr einer Kollision mit andern PLC-Signalen im Stromnetz.

Vorzugsweise umfasst der erste Sender ein LAN-Modul zur Übertragung der Messdaten in die Datencloud. Unter "LAN-Modul" ist ein Modul zu versehen, welches eine gebäudeinterne Kommunikationsverbindung über ein lokales Netzwerk ("local area network", LAN) ermöglicht. Dabei kann das LAN-Modul sowohl eine gebäudeinterne drahtgebundene Kommunikationsverbindung über LAN wie auch eine gebäudeinterne drahtlose Kommunikationsverbindung über ein "wireless local area network" (WLAN) ermöglichen.

Das LAN-Modul ist einfach und kostengünstig verfügbar und ermöglicht eine kostengünstige Übertragung der Messdaten, da üblicherweise im Gebäude bereits ein LAN bzw. ein WLAN vorhanden ist. Vorzugsweise werden die Messdaten vom Datenkonzentrator über das LAN oder WLAN an einen Router im Gebäude übertragen und von diesem via Internet weiter aus dem Gebäude in die Datencloud übermittelt.

Alternativ besteht auch die Möglichkeit, dass der erste Sender ein anderes Modul, wie beispielsweise ein Funkmodul umfasst zum Übertragen der Messdaten mit Funk oder ein Internet-Modul zum direkten Übertragen der Messdaten über Internet. Das bedingt jedoch ein teures Funkmodul oder einen aufwändigeren Anschluss des Datenkonzentrators an das Internet.

Mit Vorteil umfasst der zweite Sender ein Mobilfunkmodul zur Übertragung der Messdaten in die Datencloud. Das bietet den Vorteil, dass die Messdaten rasch und auf einfache Art und Weise ohne Verkabelung aus dem Gebäude in die Datencloud übertragen werden können. Zudem sind Mobilfunknetze bereits verfügbar, so dass nicht eigens eine Kommunikationsinfrastruktur aufgebaut werden muss. Ausserdem sind Mobilfunk-Module für gängige Mobilfunknetze einfach und kostengünstig erhältlich. Mobilfunknetze sind beispielsweise GSM, GPRS, UMTS oder LTE. Das Mobilfunkmodul kann aber auch dazu ausgebildet sein, um Daten über Mobilfunknetze der fünften Generation (5G) zu übermitteln.

Alternativ dazu besteht auch die Möglichkeit, dass der zweite Sender ein Modul für eine andere Funkverbindung, beispielsweise CB-Funk oder SRD/LPD-Funk ermöglicht. Eine solche Verbindung ist jedoch aufwändiger zu realisieren.

Vorzugsweise umfasst der erste Empfänger auch einen Sender zur Übertragung von Daten vom Datenkonzentrator an das Messgerät. Solche Daten können beispielsweise Bestätigungen, Tarifinformationen, Gerätekenndaten oder auch Anfragen zur Übermittlung der Messdaten umfassen. So kann beispielsweise eine Bestätigung über den Erhalt von Messdaten vom Datenkonzentrator an das Messgerät gesendet werden. Dadurch kann die Messdatenübertragung überwacht werden und Fehler bei der Übertragung können sofort erkannt werden. Das ermöglicht eine besonders zuverlässige Übertragung der Messdaten.

Alternativ kann der Empfänger auch keinen Sender umfassen. In diesem Fall ist nur eine Übermittlung in Richtung vom Messgerät zum Datenkonzentrator möglich.

Bevorzugt umfassen der erste Sender und der zweite Sender je einen Empfänger zum Empfangen von Daten. Dadurch ist eine bidirektionale Kommunikationsverbindung zwischen Datenkonzentrator und Datencloud möglich. Zudem ist dadurch ein einfacher Zugriff auf den Datenkonzentrator von aussen für verschiedene Benutzer möglich. So kann beispielsweise ein Benutzer der Datencloud wie beispielsweise der Energielieferant oder der Netzbetreiber auf den Datenkonzentrator zugreifen, um diesen zu konfigurieren. So können beispielsweise Tarifinformationen über die abrechnungsrelevanten Daten im Datenkonzentrator laufend angepasst werden. Zudem kann zum Beispiel von einem Benutzer der Datencloud rasch und unkompliziert die Software im Datenkonzentrator aktualisiert werden. Ausserdem können, wie oben beschrieben, auch Empfangsbestätigungen von der Datencloud zum Datenkonzentrator übermittelt werden, um das Übertragen der Messdaten zu bestätigen. Dadurch kann die Übertragung überwacht werden.

Alternativ dazu besteht auch die Möglichkeit, dass der erste und der zweite Sender keine Empfänger umfassen und daher nur Daten senden können. Der Datenkonzentrator muss in diesem Fall vor Ort eingestellt und aktualisiert werden.

Die Erfindung betrifft weiter eine Kommunikationsanordnung umfassend ein in einem Gebäude angeordnetes Messgerät zur Erfassung von Messdaten, einen in dem Gebäude angeordneten Datenkonzentrator und eine dritte Kommunikationsverbindung zwischen dem Messgerät und dem Datenkonzentrator, wobei der Datenkonzentrator einen ersten Empfänger zum Empfangen der Messdaten vom Messgerät und einen ersten Sender zur Übertragung der Messdaten in eine Datencloud umfasst. Der Datenkonzentrator umfasst gemäss der Erfindung zudem einen zweiten Sender zur Übertragung der Messdaten in die Datencloud, wobei mindestens einer der zwei Sender zur drahtlosen Übertragung der Messdaten in die Datencloud ausgebildet ist.

Vorzugsweise ist das Messgerät ein intelligenter Zähler. Dieser wird auch als "Smart Meter" bezeichnet. Der intelligente Zähler dient dazu, die abrechnungsrelevanten Daten über die im Gebäude gebrauchten Ressourcen wie beispielsweise elektrische Energie, Wasser, Öl, Fernwärme oder Gas aufzuzeichnen und an den Datenkonzentrator zu übermitteln. Der intelligente Zähler bietet den Vorteil, dass er in kurzen zeitlichen Abständen Messwerte an den Datenkonzentrator übermitteln kann, welcher die Messwerte weiter in die Datencloud übermittelt kann. Somit erhält der Strom-, Wasser- Öl-, Wärme- oder Gaslieferant laufend aktuelle Daten über den Verbrauch. Dadurch ist eine gezieltere Bereitstellung und Steuerung der entsprechenden Ressource ermöglicht. Zudem können mit dem intelligenten Zähler schneller Tarifänderungen berücksichtigt werden. Der Konsument erhält dadurch eine Abrechnung mit den aktuellen Tarifen.

Vorzugsweise handelt es sich beim Messgerät um einen intelligenten Stromzähler. Bevorzugt umfassen die Messdaten daher abrechnungsrelevante Daten über den Stromverbrauch.

Alternativ kann auch ein herkömmliches Messgerät eingesetzt werden. Dieses kann jedoch nicht so gut parametriert werden wie ein intelligenter Zähler. Zudem kann ein herkömmliches Messgerät nicht in kurzen zeitlichen Abständen Messwerte liefern wie ein intelligenter Zähler.

Weiter betrifft die Erfindung ein Verfahren zur Übertragung von Messdaten mit einem in einem Gebäude angeordnetem Datenkonzentrator, umfassend die Schritte
a) Übertragen der Messdaten von einem in einem Gebäude angeordneten Messgerät zum Datenkonzentrator;
b) Übertragen der Messdaten vom Datenkonzentrator in eine Datencloud wahlweise mit einem ersten Sender des Datenkonzentrators oder einem zweiten Sender des Datenkonzentrators;
c) wobei gemäss der Erfindung die Übertragung mit zumindest einem der beiden Sender drahtlos erfolgt.

Vorzugsweise konzentriert der Datenkonzentrator die Messdaten und übermittelt die konzentrierten Messdaten in die Datencloud. Unabhängig davon welcher der zwei Sender verwendet wird, kann dadurch der Datenfluss in der Kommunikationsverbindung zwischen Datenkonzentrator und Datencloud reduziert werden. Somit wird, falls die Messdaten drahtgebunden übertragen werden, die Datenleitung weniger ausgelastet oder, falls die Messdaten drahtlos übertragen werden, das Funknetz weniger ausgelastet. Dadurch wird die Übertragungsgeschwindigkeit nicht beeinträchtigt.

Vorzugsweise werden die Messdaten von mehreren Messgeräten im Gebäude zum Datenkonzentrator übertragen werden. Die Messdaten von den mehreren Messgeräten werden vorzugsweise im Datenkonzentrator konzentriert und gebündelt in die Datencloud übermittelt. Dadurch wird die Datenleitung oder das Funknetzes nicht übermässig ausgelastet bzw. belastet. Ferner können durch die Konzentration und Bündelung der Messdaten diese besonders effizient genutzt und ausgewertet werden.

Bevorzugt kann der Datenkonzentrator die Messdaten in einstellbaren Intervallen vom Messgerät abrufen. Dadurch kann die Menge an Messdaten optimal eingestellt werden.

Alternativ besteht die Möglichkeit, dass das Intervall fest eingestellt ist und nicht veränderbar ist.

Wenn eine geplante Übertragung nicht erfolgreich war oder die Kommuniktionsverbindung zwischen Datenkonzentrator und Datencloud unterbrochen ist, werden die Messdaten vorzugsweise im Datenkonzentrator zwischengespeichert. Vorzugsweise wird das Übertragen der Messdaten in bestimmten Abständen automatisch wiederholt, wenn eine geplante Übertragung nicht erfolgreich war. Wenn die Übertragung nicht wiederholt wird, besteht die Gefahr, dass Daten verloren gehen oder die zeitlichen Abstände zwischen den Messdaten zu gross sind, damit sie der Empfänger sinnvoll weiterverwenden kann.

Mit Vorteil liegt das Intervall zwischen einer Sekunde und 2 Monaten. Dadurch kann das Abrufen der Messdaten vom Messgerät je nach Anforderungen exakt eingestellt werden.

Alternativ dazu kann das Intervall in einen anderen Bereich beispielsweise zwischen 2 und 4 Monaten liegen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: zeigt schematisch die erfindungsgemässe Kommunikationsanordnung mit dem erfindungsgemässen Datenkonzentrator und einem intelligenten Stromzähler;
- Fig. 2: zeigt schematisch den Aufbau des intelligenten Stromzählers und den Aufbau des Datenkonzentrators;
- Fig. 3: zeigt schematisch die Datencloud mit den Benutzern, welche Zugriff auf die Daten in der Datencloud haben.

Grundsätzlich sind in den Figuren gleiche Teile mit gleichen Bezugszeichen versehen.

### Wege zur Ausführung der Erfindung

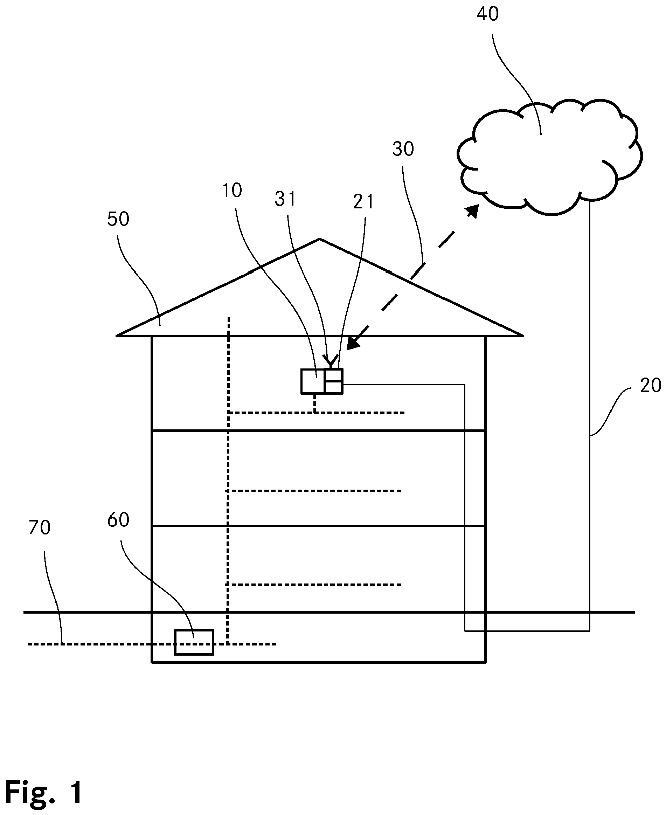

Die Figur 1 zeigt schematisch ein Gebäude 50 in dem sich die erfindungsgemässe Kommunikationsanordnung befindet. Diese umfasst einen intelligenten Stromzähler 60 zur Erfassung von Messdaten über den Stromverbrauch im Gebäude 50, einen erfindungsgemässen Datenkonzentrator 10 in einem oberen Stockwerk des Gebäudes 50 und eine Kommunikationsverbindung zwischen dem Stromzähler 60 und dem Datenkonzentrator 10. Diese Kommunikationsverbindung ist über eine gebäudeinterne Stromleitung 70 realisiert, indem der Stromzähler 60 mit dem Datenkonzentrator 10 über die Stromleitung 70 verbunden ist und mittels Narrowband Powerline Communication (NB-PLC) Daten zwischen dem Stromzähler 60 und dem Datenkonzentrator 10 übermittelt werden können.

Der Datenkonzentrator 10 konzentriert die Messdaten und übermittelt die Messdaten weiter an eine Datencloud 40 ausserhalb des Gebäudes. Hierzu umfasst der Datenkonzentrator 10 einen ersten Sender 31 und ein LAN-Modul 14 zur Übertragung der Messdaten in eine Datencloud 40 über eine erste Kommunikationsverbindung 20 über ein gebäudeinternes LAN oder WLAN und Internet. Das LAN bzw. WLAN ist dabei mit dem Internet verbunden, so dass die Messdaten zuerst mit dem LAN oder WLAN und anschliessend über Internet in die Datencloud 40 übertragen werden. Weiter umfasst der Datenkonzentrator 10 einen zweiten Sender 21 und ein GPRS-Modem 12 zur drahtlosen Übertragung der Messdaten über eine zweite Kommunikationsverbindung 30 mittels Mobilfunk in die Datencloud 40. Alternativ kann es sich beim Modem 12 auch um ein UMTS-Modul, LTE-Modul oder um ein sonstiges Mobilfunk-Modul handeln.

In der gezeigten Ausführung handelt es sich beim Messgerät um einen intelligenten Stromzähler 60. Es kann aber beispielsweise genauso gut ein intelligenter Wasserzähler, ein intelligenter Wärmezähler oder ein intelligenter Gaszähler am Datenkonzentrator angeschlossen werden. Zudem wird der Einfachheit halber nur ein Messgerät 60 erwähnt. Der Datenkonzentrator kann jedoch von mehreren im Gebäude angeordneten Messgeräten 60 Messdaten empfangen, konzentrieren und in die Datencloud 40 übertragen.

Wie in Figur 1 ersichtlich ist, befindet sich der intelligente Stromzähler 60 in einem Untergeschoss des Gebäudes 50 beim Eingang der Stromleitung 70 in das Gebäude 50. Dabei erfasst der intelligente Stromzähler 60 kontinuierlich die aus dem öffentlichen Stromnetz 70 bezogene elektrische Energie. Der Stromzähler 60 verfügt über eine PLC-Schnittstelle, um über Powerline Communication (PLC) mit dem Datenkonzentrator 10 zu kommunizieren. Der Aufbau des intelligenten Stromzählers 60 wird weiter unten im Detail beschrieben.

Der Datenkonzentrator 10, welcher ebenfalls eine PLC-Schnittstelle aufweist, kann in veränderbaren Intervallen Messdaten vom Stromzähler 60 abrufen. Das Intervall liegt dabei zwischen einigen Sekunden und einer Viertelstunde. In der Figur 1 ist die Stromleitung 70 im Gebäude als gestrichelte Linie dargestellt. Die Stromleitungen 70 führen in bekannter Weise in alle Stockwerke des Gebäudes 50, um alle Räumlichkeiten des Gebäudes 50 mit Strom zu versorgen. In einer alternativen Ausführung können die Messdaten auch mit einem Meter-Bus oder mit einem drahtlosen Meter-Bus (Funk M-Bus) vom Stromzähler 60 zum Datenkonzentrator 10 übermittelt werden.

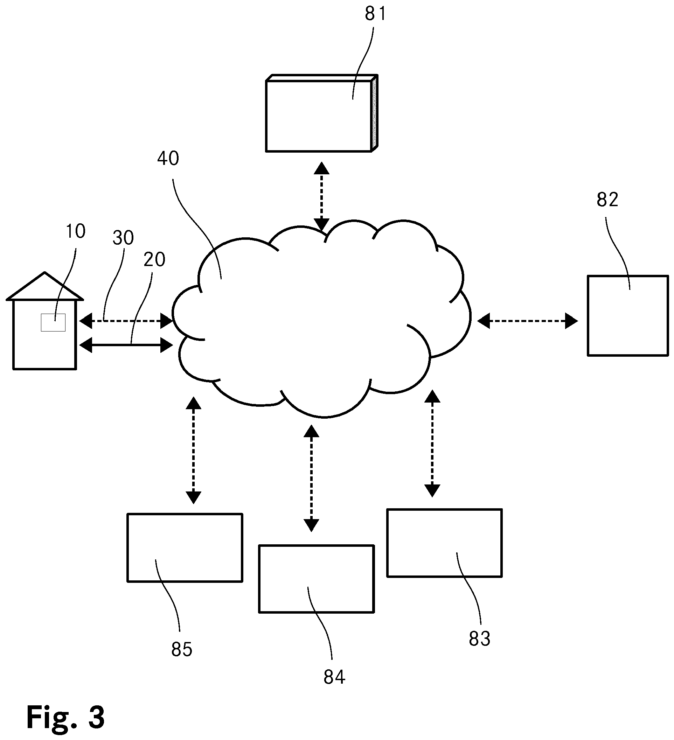

Der Datenkonzentrator 10 sammelt die Messdaten vom Stromzähler 60 oder von den allenfalls mehreren Stromzählern 60, konzentriert die Messdaten und sendet diese gebündelt über die erste oder die zweite Kommunikationsverbindung 20, 30 in die Datencloud 40. Die Messdaten werden in der Datencloud 40 abgespeichert. Autorisierte Benutzer können sich in die Datencloud 40 einloggen und haben Zugriff auf die in der Datencloud 40 befindlichen Daten. Die Benutzer der Datencloud 40 sind weiter unten im Zusammenhang mit Figur 3 näher erläutert.

Die PLC-Schnittstelle im Datenkonzentrator 10 erlaubt auch das Senden von Daten vom Datenkonzentrator 10 zum Stromzähler 60. Das bedeutet die PLC-Verbindung zwischen Stromzähler 60 und dem Datenkonzentrator 10 ist bidirektional ausgebildet. Zudem können mit dem LAN-Modul 14 und dem GPRS-Modem 12 im Datenkonzentrator 10 nicht nur Messdaten gesendet werden, sondern auch Daten von der Datencloud 40 empfangen werden. Dadurch ist ein Zugriff von einem Benutzer der Datencloud 40 auf den Datenkonzentrator 10 möglich. So kann beispielsweise der Datenkonzentrator 10 von einem Benutzer der Datencloud 40 parametriert werden oder Registerwerte und konkrete Messwerte können aus dem Datenkonzentrator 10 ausgelesen werden. Zudem können auch Empfangsbestätigungen oder Tarifänderungen von einem Benutzer der Datencloud 40 über die Datencloud 40 und den Datenkonzentrator 10 zum intelligenten Stromzähler 60 übermittelt werden.

Der Datenkonzentrator 10 umfasst eine Rechnereinheit (CPU) 17. Diese prüft, ob die erste Kommunikationsverbindung 20 zwischen dem Datenkonzentrator 10 und der Datencloud 40 über das LAN oder WLAN und Internet verfügbar ist und ob die zweite Kommunikationsverbindung 30 über das Mobilfunknetz verfügbar ist. Die CPU 17 wählt die verfügbare Kommunikationsverbindung 20, 30 aus. Sind beide Kommunikationsverbindungen 20, 30 verfügbar, wählt die CPU 17 wenn immer möglich die erste Verbindung mittels LAN oder WLAN und Internet aus, da bei dieser Kommunikationsverbindung 20 im Gegensatz zur Mobilfunkverbindung keine zusätzlichen Übertragungskosten anfallen. Bei einer Abtastrate von 10 Sekunden entsteht ein Bitstream von maximal 200 Bits/s, wenn die Messdaten vom Datenkonzentrator 10 zur Datencloud 40 gesendet werden. Dadurch wird das LAN bzw. WLAN kaum merklich belastet.

Ist das gebäudeinterne LAN oder WLAN abgeschaltet oder wird die LAN- oder WLAN-Verbindung unterbrochen, wählt die CPU 17 automatisch die zweite Kommunikationsverbindung 30 mittels Mobilfunknetz zur Übertragung der Messdaten in die Datencloud 40. Die CPU 17 stellt somit sicher, dass wenn möglich, die kostengünstige Kommunikationsverbindung 20, 30 zwischen Datenkonzentrator 10 und Datencloud 40 verwendet wird.

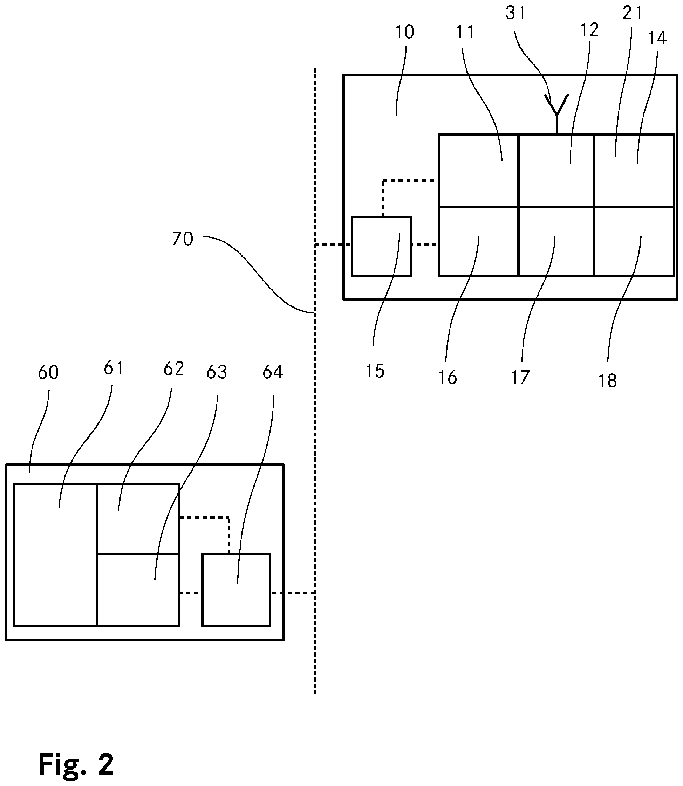

Die Figur 2 stellt je schematisch den Aufbau des intelligenten Stromzählers 60 und des erfindungsgemässen Datenkonzentrators 10 dar, die miteinander über die Stromleitung 70 im Gebäude 50 verbunden sind. Der Stromzähler 60 und der Datenkonzentrator 10 sind nachfolgend im Detail erläutert.

Der intelligente Stromzähler 60 umfasst eine Messeinheit 61, welche die von Verbrauchern im Gebäude 50 bezogene elektrische Energie misst, eine Stromversorgungseinheit 63, um den Stromzähler 60 mit elektrischer Energie zu versorgen, ein Narrowband Powerline Communication-Modem (NB-PLC-Modem) 62 und einen PLC-Koppler 64. Das NB-PLC-Modem 62 bereitet die von der Messeinheit 61 erfasst Messdaten auf, um diese mittels PLC übermitteln zu können oder wandelt die über PLC empfangenen Daten um, damit diese im Stromzähler weiterverarbeitet werden können. Der PLC-Koppler 64 speist die aufbereiteten Daten in die Stromleitung 70 des Gebäudes 50 ein oder empfängt die über die Stromleitung 70 einkommenden Daten und leitet diese an das NB-PLC-Modem 62 weiter. Der intelligente Stromzähler 60 ist nicht nur für die Datenübertragung, sondern auch für seine Energieversorgung mittels der Stromversorgungseinheit 63 an der Stromleitung 70 angeschlossen. Zusätzlich umfasst der intelligente Stromzähler 60 eine Meter-Bus-Schnittstelle. Mit dieser können direkt Daten aus dem intelligenten Stromzähler mittels Meter-Bus (M-Bus) oder drahtlosem M-Bus ausgelesen werden.

Der Datenkonzentrator 10 umfasst ebenfalls einen PLC-Koppler 15, ein NB-PLC-Modem 11, das GPRS-Modem 12, das LAN-Modul 14, die CPU 17, eine Stromversorgungseinheit 16 eine Speichereinheit 18 und eine USB-Schnittstelle. Der PLC-Kopper 15 und das NB-PLC-Modem 11 des Datenkonzentrators 10 funktionieren wie beim Stromzähler 60. Das GPRS-Modem 12 ermöglicht, wie oben bereits erwähnt, das Übermitteln der Messdaten via Mobilfunknetz und das Empfangen von Daten von Benutzern der Datencloud via Mobilfunknetz. Das LAN-Modul 14 ermöglicht das Übermitteln der Messdaten via gebäudeinternen LAN oder WLAN und das Empfangen von Daten aus dem LAN oder WLAN. Dabei kann das LAN-Modul 14 auch als USB-Dongle realisiert sein, welcher über die USB-Schnittstelle an den Datenkonzentrator 10 geschlossen wird. Zudem kann an der USB-Schnittstelle ein Eingabegerät wie ein Computer angeschlossen werden, um den Datenkonzentrator 10 zu parametrieren oder um Messwerte aus dem Datenkonzentrator 10 auszulesen. Die CPU 17, welche in Form eines Mikroprozessors realisiert ist, enthält eine programmierbare Logik zum Auswählen der geeigneten Kommunikationsverbindung 20, 30 wie oben beschrieben. In der beschriebenen Ausführung ist die Kommunikationseinheit 10 als eigenständiges Gerät ausgebildet, welches in einem Raum des Gebäudes 50 installiert werden kann.

Der Datenkonzentrator 10 kann in den Modi "Lastgangzähler", "Haushaltszähler" und "Smart Grid" betrieben werden. In jedem der Modus können die Abtastzeiten individuell eingestellt werden. Für jeden am Datenkonzentrator 10 anschliessbaren Zähler (Strom-, Gas-, Wasser- oder Wärmezähler) kann eine eigene Abtastrate gewählt werden.

Im Modus "Lastgangzähler" wird, wenn immer möglich, die erste Kommunikationsverbindung 20 über LAN oder WLAN und Internet verwendet. Über die LAN- oder WLAN-Verbindung werden die Messwerte alle 0.25 Stunden vom intelligenten Stromzähler 60 abgerufen und an die Datencloud 40 übermittelt. Zusätzlich werden über zweite Kommunikationsverbindung 30 über das Mobilfunknetz die Messwerte alle 0.25 Stunden abgerufen und einmal pro Tag an die Datencloud 40 übertragen.

Auch im Modus "Haushaltszähler" wird, wenn immer möglich, die LAN- oder WLAN-Verbindung gewählt. Messwerte werden nur über das Mobilfunknetz gesendet, wenn die LAN- oder WLAN-Verbindung nicht verfügbar ist. Im Unterschied zum Modus "Lastgangzähler" werden jedoch nur monatlich Messwerte in die Datencloud 40 übermittelt. Zusätzliche Messwerte für den Benutzer können jedoch über die LAN- oder WLAN-Verbindung in einem einstellbaren Intervall zwischen 1 - 900 Sekunden in die Datencloud 40 übermittelt werden.

Im Modus "Smart Grid" muss immer eine LAN- oder WLAN-Verbindung vorhanden sein. Die zweite Kommunikationsverbindung 30 über Mobilfunk ist eine reine Notfallverbindung, die nur verwendet wird, wenn die LAN- oder WLAN-Verbindung nicht funktioniert. In diesem Modus werden über die LAN- oder WLAN-Verbindung alle 10 Sekunden Messdaten in die Datencloud 40 übertragen.

In allen Modi können über die Mobilfunkverbindung von einem Benutzer der Datencloud Steuersignale an den Datenkonzentrator 10 gesendet werden. Die vom angeschlossenen Zähler empfangenen Messwerte werden im Datenkonzentrator 10 in der Speichereinheit 18 zwischengespeichert. Die Speicherzeit kann eingestellt werden und liegt zwischen 0.25 Stunden und einem Monat.

Die Figur 4 zeigt schematisch die Datencloud 40 mit den Benutzern, welche Zugang zu den Daten in der Datencloud 40 haben. Der erfindungsgemässe Datenkonzentrator 10 kann, wie erwähnt, sowohl Messdaten über die erste Kommunikationsverbindung 20 via LAN oder WLAN und Internet (ausgezogene Linie) wie auch über die zweite Kommunikationsverbindung 30 via Mobilfunknetz (unterbrochene Linie) in die Datencloud 40 übertragen und über die erste oder die zweite Kommunikationsverbindung 20, 30 Daten von Benutzern der Datencloud 40 empfangen.

Zudem ist die Übertragung nicht auf Messdaten beschränkt. Auch die Einstellungsparameter für den Datenkonzentrator 10 können in der Datencloud 40 abgespeichert werden und je nach Bedarf durch die Benutzer der Datencloud geändert werden. Zudem können auch die Login-Daten für das Login in die Software des Datenkonzentrators 10 in der Datencloud 40 gespeichert werden.

Neben dem Datenkonzentrator 10 selber haben auch der Netzbetreiber 85, der Energieversorger 84, die Bilanzgruppe 83, sowie der Anbieter von Systemdienstleistungen (SDL) 82 Zugriff auf die Datencloud 40. Eine Bilanzgruppe ist eine virtuelle Gruppe, innerhalb derer ein Ausgleich zwischen zur Verfügung stellen und Abgabe von elektrischer Energie erfolgt. Die Bilanzgruppe dient hauptsächlich zu Abrechnungszwecken und umfasst eine beliebige Anzahl von Einspeise- und/oder Entnahmestellen. Jeder Netzbetreiber, Händler, Energieversorger und Endverbraucher muss einer Bilanzgruppe angehören. Unter Systemdienstleistungen sind Frequenzhaltung, Spannungshaltung, Versorgungswiederaufbau und Netzengpassmanagement zu verstehen. Des Weiteren können sich autorisierte Benutzer mit einem Anzeigegerät 81 wie einem Computer, Tablet oder Smartphone einloggen und sich die Daten in der Datencloud 40 anzeigen lassen.

Da der Netzbetreiber 85, der Energieversorger 84 und die Bilanzgruppe 83 Zugang zur Datencloud 40 mit den aktuellen Messdaten haben, können diese die benötigten Ressourcen gezielt bereitstellen und auf allfällige Änderungen rasch reagieren. Der Energieversorger 84 und die Bilanzgruppe 83 können anhand der regelmässigen und aktuellen Daten aus Strommessungen dank dem direkten Zugang zur Datencloud 40 Prognose- und Abrechnungsprozesse effizient gestalten und eine kurzfristige Rechnungsstellung nach dem tatsächlichen Stromverbrauch vornehmen.

Die Erfindung ist nicht auf den oben beschriebenen Datenkonzentrator 10 und die beschriebene Kommunikationsanordnung beschränkt. Der Datenkonzentrator 10 muss nicht zwingend bei der Strommessung eingesetzt werden, sondern kann auch Messdaten von einem Gas-, Wasser-, Öl- oder Wärmezähler empfangen und an die Datencloud 40 weiterleiten. Zudem ist nicht zwingend, dass der Datenkonzentrator 10 die empfangenen Messdaten konzentriert. Er kann die Messdaten auch nur in die Datencloud 40 weiterleiten. Auch ist nicht zwingend, dass die Verbindung zwischen dem Messgerät und dem Datenkonzentrator 10 eine PLC-Verbindung ist. Genauso gut kann die Verbindung über ein Bussystem erfolgen. Die erste Kommunikationsverbindung 20 muss nicht über ein LAN und Internet erfolgen, sondern die Verbindung zur Datencloud 40 kann vom ersten Sender 21 beispielsweise auch direkt über Internet oder über eine getrennte drahtgebundene oder auch drahtlose Verbindung erfolgen. Auch die zweite Kommunikationsverbindung 30 muss nicht zwingend über Mobilfunk erfolgen, sondern kann vom zweiten Sender 31 mit einer anderen Funkverbindung realisiert sein. Zudem ist die Reihenfolge der Bezeichnung der Sender 21, 31 und der Kommunikationsverbindungen 20, 30 unerheblich. So kann auch der erste Sender 21 eine drahtlose Kommunikationsverbindung 30 zur Datencloud 40 und der zweite Sender 31 eine drahtgebundene Kommunikationsverbindung 20 zur Datencloud 40 ermöglichen.

Ferner müssen die Messdaten nicht nur gemessene Daten beinhalten, sondern können auch gerätespezifische Angaben, Zeit- oder Datumsangaben oder sonstige Informationen umfassen.

Zusammenfassend ist festzustellen, dass ein Datenkonzentrator geschaffen wurde, welcher zuverlässig eine Kommunikationsverbindung zwischen dem Datenkonzentrator und einem Empfänger ausserhalb des Gebäudes sicherstellt.

## Patentansprüche

1. Datenkonzentrator (10) zur Anordnung in einem Gebäude (50), wobei der Datenkonzentrator (10) einen ersten Empfänger umfasst zum Empfangen von Messdaten von einem im Gebäude (50) angeordneten Messgerät (60), und der Datenkonzentrator (10) einen ersten Sender (21) umfasst zur Übertragung der Messdaten in eine Datencloud (40),
**dadurch gekennzeichnet, dass**
der Datenkonzentrator (10) einen zweiten Sender (31) umfasst zur Übertragung der Messdaten in die Datencloud (40), wobei mindestens einer der zwei Sender (21, 31) zur drahtlosen Übertragung der Messdaten in die Datencloud (40) ausgebildet ist.

2. Datenkonzentrator (10) nach Anspruch 1, **dadurch gekennzeichnet, dass** der Datenkonzentrator (10) derart ausgebildet ist, um wahlweise den ersten oder den zweiten Sender (21, 31) zur Übertragung der Messdaten in die Datencloud (40) benutzen zu können.

3. Datenkonzentrator (10) nach Anspruch 2, **dadurch gekennzeichnet, dass** der Datenkonzentrator (10) derart ausgebildet ist, in Abhängigkeit einer Verfügbarkeit einer ersten Kommunikationsverbindung (20) zwischen dem ersten Sender (21) und der Datencloud (40) und einer Verfügbarkeit einer zweiten Kommunikationsverbindung (30) zwischen dem zweiten Sender (31) und der Datencloud (40), den ersten oder den zweiten Sender (21, 31) zur Übertragung der Messdaten in die Datencloud (40) zu wählen.

4. Datenkonzentrator (10) nach einem der Ansprüche 1 bis 3, **dadurch gekennzeichnet, dass** der erste Empfänger ein Powerline Communication Modul umfasst, zum Empfangen der Messdaten mittels Powerline Communication-Technik.

5. Datenkonzentrator (10) nach Anspruch 4, **dadurch gekennzeichnet, dass** das Powerline Communication Modul ein Narrowband Powerline Communication Modul ist (11), zum Empfangen der Messdaten mittels Narrowband Powerline Communication.

6. Datenkonzentrator (10) nach einem der Ansprüche 1 bis 5, **dadurch gekennzeichnet, dass** der erste Sender (21) ein LAN-Modul (14) umfasst zur Übertragung der Messdaten in die Datencloud (40).

7. Datenkonzentrator (10) nach einem der Ansprüche 1 bis 6, **dadurch gekennzeichnet, dass** der zweite Sender (31) ein Mobilfunkmodul (12) umfasst zur Übertragung der Messdaten in die Datencloud (40).

8. Datenkonzentrator (10) nach einem der Ansprüche 1 bis 7, **dadurch gekennzeichnet, dass** der erste Empfänger auch einen Sender umfasst zur Übertragung von Daten an das Messgerät (60).

9. Datenkonzentrator nach einem der Ansprüche 1 bis 8, **dadurch gekennzeichnet, dass** der erste Sender (21) und der zweite Sender (31) je einen Empfänger umfassen zum Empfangen von Daten.

10. Kommunikationsanordnung umfassend ein in einem Gebäude (50) angeordnetes Messgerät (60) zur Erfassung von Messdaten, einen in dem Gebäude (50) angeordneten Datenkonzentrator (10) und eine dritte Kommunikationsverbindung zwischen dem Messgerät (60) und dem Datenkonzentrator (10), wobei der Datenkonzentrator (10) einen ersten Empfänger zum Empfangen der Messdaten vom Messgerät (60) und einen ersten Sender (21) zur Übertragung der Messdaten in eine Datencloud (40) umfasst,
**dadurch gekennzeichnet, dass**
der Datenkonzentrator (10) einen zweiten Sender (31) umfasst zur Übertragung der Messdaten in die Datencloud (40), wobei mindestens einer der zwei Sender (21, 31) zur drahtlosen Übertragung der Messdaten in die Datencloud (40) ausgebildet ist.

11. Kommunikationsanordnung nach Anspruch 10, **dadurch gekennzeichnet, dass** das Messgerät (60) ein intelligentes Strommessgerät ist.

12. Verfahren zur Übertragung von Messdaten mit einem in einem Gebäude (50) angeordnetem Datenkonzentrator (10), umfassend die Schritte
a) Übertragen der Messdaten von einem in einem Gebäude (50) angeordneten Messgerät (60) zum Datenkonzentrator (10);
b) Übertragen der Messdaten vom Datenkonzentrator (10) in eine Datencloud (40) wahlweise mit einem ersten Sender (21) des Datenkonzentrators (10) oder einem zweiten Sender (31) des Datenkonzentrators (10),
c) wobei die Übertragung mit zumindest einem der beiden Sender (21, 31) drahtlos erfolgt.

13. Verfahren nach Anspruch 12, **dadurch gekennzeichnet, dass** die Messdaten von mehreren Messgeräten (60) im Gebäude (50) zum Datenkonzentrator (10) übertragen werden.

14. Verfahren nach einem der Ansprüche 12 oder 13, **dadurch gekennzeichnet, dass** der Datenkonzentrator (10) die Messdaten in einstellbaren Intervallen vom Messgerät (60) abrufen kann.

15. Verfahren nach Anspruch 14, **dadurch gekennzeichnet, dass** das Intervall zwischen einer Sekunde und 2 Monaten liegt.
